# EUROPEAN PATENT SPECIFICATION

(11) **EP 2 071 773 B1**
(45) Date of publication and mention of the grant of the patent: **20.07.2011**
(21) Application number: 07123277.1
(22) Date of filing: 14.12.2007
(51) Int. Cl.: H04L 12/56

(54) **Back pressure mechanism using delay variation between packets on a point-to-point link**
Back-Pressure-Mechanismus mit Verzögerungsvariation zwischen Paketen auf einer Punkt-zu-Punkt-Verbindung
Mécanisme de contre-pression utilisant la variation de délai entre les paquets sur un lien point à point

(43) Date of publication of application: 17.06.2009
(73) Proprietor: Alcatel Lucent, 75007 Paris (FR)
(72) Inventor: Willigenburg, Willem, Hilversum 1223 JR (NL)
(74) Representative: Schmidt, Werner Karl

(56) References cited:
- EP-A- 0 415 843
- EP-A- 0 763 915
- EP-A- 1 628 446
- US-B1- 6 996 059

## Description

The present invention relates to data communication between network elements and back pressure mechanisms used to control a data flow.

In the area of data communication multiple methods for controlling the data flow between different network elements are known. Network elements often comprise queuing and/or buffering means to absorb variations in the frequency of transmitted data packets. If such buffers and/or queues approach an overflow or saturation situation, prior art means exist to inform the sender or senders of the data packets to reduce the amount and / or the frequency of sent data packets. Such a situation is generally referred to as back pressure - in analogy to the back pressure which builds up, if physical flows, such as exhaust gases in an exhaust pipe, cannot evacuate as fast as they are produced. In many of such cases, the transmitting network element is requested to halt or at least to reduce the sending of data packets, until the buffers and/or queues at the receiving network element have been sufficiently emptied and are capable again of treating incoming data packets.

In general, flow control is the process of managing the rate of data transmission between two network elements or nodes. Flow control mechanisms can be classified by whether or not the receiving node sends feedback to the sending node and one often distinguishes between two classes, open-loop flow control and closed-loop flow control.

The open-loop flow control mechanism is characterized by having no feedback between the receiver and the transmitter. This simple means of control is widely used and due to the fact that there is no feedback loop, the allocation of resources must be done by prior resource reservation. As the maximum required resources are reserved upon link setup, e.g. via connection admission control, the open-loop flow control has inherent problems with maximizing the utilization of network resources. Consequently, one is often facing an over-allocation of resources. Typically open-loop flow control is used by CBR (constant bit rate), VBR (variable bit rate) and UBR (unspecified bit rate) services within ATM networks.

The closed-loop flow control mechanisms are characterized by the ability of the network to report network element congestions back to the transmitter. This information is then used by the transmitter to adapt its activity to existing network conditions. A closed-loop flow control is for example used by the ABR (available bit rate) service in ATM networks. The ABR service uses Resource Management (RM) ATM cells to provide feedback that controls the traffic source node in response to fluctuations in available resources, e.g. fluctuations with respect to filling levels of the buffers at the receiving node. The specification for ABR flow control uses these RM cells to control the flow of cell traffic on ABR connections. The ABR service expects the sending node to adapt its traffic rate in accordance with the feedback in order to obtain its fair share of available network resources.

Closed-loop flow control mechanisms either use in-band feedback loops, i.e. particular control commands defined for specific network layer protocols such as ATM and/or TCP, or they make use of dedicated out-band feedback loops, such as the dedicated control lines of an RS-232 interface defined for serial computer ports.

The US patent US6996059 discloses a device that forms packets for a stream of information being transmitted over a packet switched network (such as the Internet) in the normal manner. The device responds to a predetermined event by deliberately forming packets to provide a different quality of service, as compared to the service quality provided by packets that were formed prior to the event. The predetermined event can be triggered by a change in processing requirements in the device that forms the packets (also called "source device"). Alternatively, when a processing requirement change occurs in another device that is coupled to the source device, the other device can inform the source device. If the other device generates and transmits another stream (also called "return stream") back to the source device, the other device can notify the source device implicitly, by simply using a changed payload size in packets that form the return stream.

The present invention discloses a method and a system for flow control between two network elements connected via a point-to-point connection. The method uses traffic patterns and/or transmission parameters of the exchanged data packet traffic in order to signal buffer and/or queue congestion situations to the sending network element. This way of communication may be viewed as another means of providing feedback to the sending network element, different from the control commands and/or separate control channels known from the prior art. The disclosed method and/or system may also be applied advantageously in combination with networks using open-loop network control mechanisms which have no defined feedback channels.

According to an aspect of the invention, a method for controlling the packet flow between a first and a second network element connected via a point-to-point connection is disclosed. In a first step, the second network element detects that an input buffer threshold has been reached. Such a buffer may be the input queue for packets received from the first network element. The threshold may be an upper threshold or a high-water mark, indicating that the buffer is close to reaching an overflow situation. On the other hand, the threshold may also indicate a lower mark, indicating that the frequency of the packets coming in from the first network element may be increased.

In a second step, the second network element signals the information that a threshold has been reached to the first network element. This is done by modifying at least one transmission parameter of a flow sent from the second network element to the first network element. In contrary to prior art, no specific protocol messages are sent to the first network element. Thus, the proposed backpressure mechanism can be applied even if the protocol used between the two network elements does not provide feedback means. Instead a transmission parameter is modified. This measure may preferably be implemented outside the scope of the protocol used between the two network elements. By way of example, the at least one transmission parameter may be the inter-packet delay, i.e. the inter-packet distance, between the packets sent from the second network element to the first network element.

Within a third step of the method, the first network element detects that the at least one transmission parameter of the flow received from the second network element has been modified. The at least one transmission parameter may be the inter-packet delay of the packet flow received from the second network element. By way of example, the inter-packet delay may have been reduced in order to indicate that the buffer of the second network element is reaching an overflow situation. For the first network element to be able to detect a modified inter-packet delay and to prevent misdetections, it may be necessary to maintain the modified inter-packet delay within narrow bounds over a certain period of time. Therefore, it may be required - notably when there are not enough packets to be sent from the second network element to the first network element - that the second network element inserts fake packets which are sent to the first network element. By inserting fake packets, the modified inter-packet delay may be maintained within strict bounds for the required time period. These fake packets may then be discarded or dumped at the first network element.

In a fourth step, the first network element changes the flow of the traffic sent to the second network element. Preferably the changing of the flow, notably the speed of the flow, i.e. the frequency of sent data packets, is done according to a pre-defined scheme agreed between the second network element and the first network element. Alternatively, the packet length may be taken into account and the packet throughput controlled based on flow control information received from the second network element signaled via the modified inter-packet delay. By way of example, reducing the inter-packet delay may signal to the first network element to reduce the number of packets or the amount of traffic sent within a given time frame to the second network element. On the other hand, increasing the inter-packet delay may signal to the first network element that packets may be sent more frequently. Furthermore, the network elements may be enabled to measure the absolute or relative value by which an inter-packet delay is modified. In such cases, this absolute value may be used to signal the exact amount by which the packet transmission frequency should be modified. In another example, the detection of a modified inter-packet delay may trigger the first network element to completely halt the transmission of packets to the second network element. For this purpose, the first network element may require an output buffer. By returning to a normal value of the inter-packet delay, the second network element may signal to the first network element to resume sending packets.

According to another aspect of the invention, the length of the inter-packet delay may be manipulated to carry information on the filling rate of the input buffer of the second network element to the first network element and vice versa. By manipulating the inter-packet delay, there is no need for separate protocol packets to provide such back pressure information.

According to another aspect of the invention, the inter-packet delay may vary in normal operation. In such cases, the fact that the second network element sends packets to the first network element with a largely constant inter-packet delay over a certain period of time may be decoded by the first network element as an instruction to change the amount of traffic sent to the second network element. Instead of measuring the inter-packet delay for a certain period of time, the first network element may also observe the inter-packet delay for a certain number of packets, before concluding that flow control information has been sent by the second network element. Detecting a constant inter-packet delay for a certain period of time or over a certain number of packets before decoding a flow control signal reduces accidental misrecognitions and provides a reliable communication of the back-pressure signal.

According to another aspect of the invention, the absolute or relative value of the inter-packet delay may be used to feedback more specific flow control information from the second network element to the first network element. By way of example an increasing value of the inter-packet delay over a normal or previously agreed value may be decoded by the first network element as an instruction to increase the amount of traffic, i.e. the frequency and / or the length of packets, sent to the second network element. On the other hand, a reduced inter-packet delay value may be understood as an instruction to lower the amount of traffic sent. In general terms, it may be said that the second network element may take transmission parameters, such as the inter-packet delay, and modulate them in various ways in order to provide flow control information to the first network element. Several modulation schemas are possible according to the invention for modulating the flow control information onto the inter-packet delay. For instance, the packet transmission rate for releasing packets from the first network element may be directly proportionally coded in the inter-packet delay via a characteristic curve that maps a packet transmission rate to a inter-packet delay. Other encoding schemas such as based on thresholds and discrete values for packet transmission rate and inter-packet delay, or simple encodings with only 3 values (keep transmission rate, increase transmission rate, reduce transmission rate) are possible, too.

It should be noted that basically the above mentioned aspects of the invention may be combined in many useful ways. Furthermore, it should be noted that the disclosure of the invention also covers other claim combinations than the claim combinations which are explicitly given by the back references in the dependent claims, i.e., the claims may be basically combined in any order.

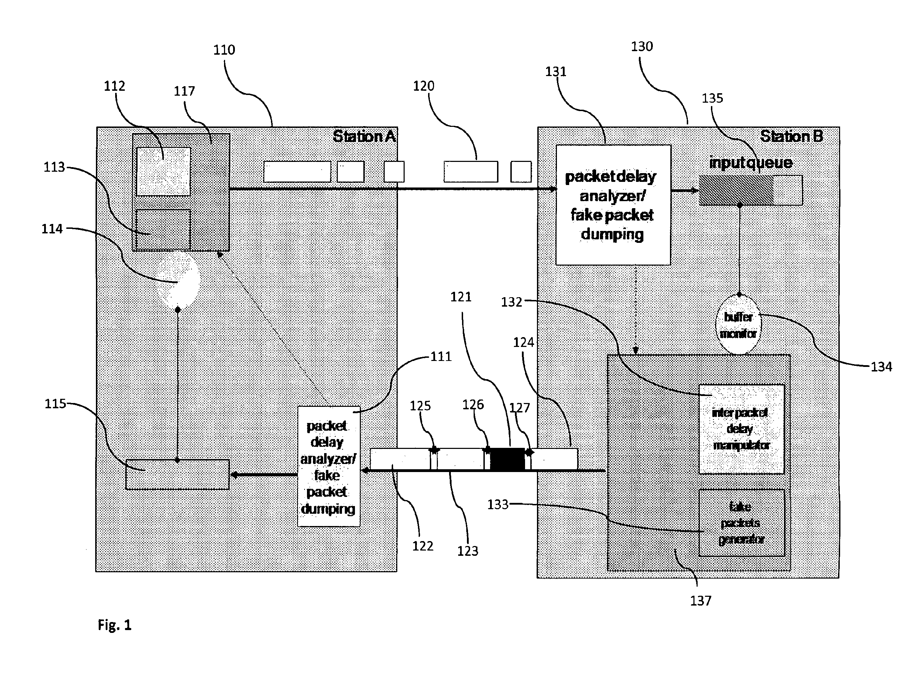

The advantages and features of the invention will become apparent from the description of preferred embodiments. The present invention is described in the following by referring to exemplary embodiments illustrated schematically in the accompanying figure, wherein
Fig.1 illustrates an embodiment of two network elements using the disclosed method to communicate back pressure information.

Figure 1 shows two network elements 110, 130, named station A and station B, respectively. Both network elements comprise an input queue 115, 135 and a packet delay analyzer 111, 131 which is also in charge of dumping possible fake packets received from the other network element. For sending purposes, both network elements comprise transmitters 117, 137 which comprise inter-packet delay manipulators 112, 132 and fake packet generators 113, 133. A buffer monitor 114, 134 monitors the situation within the respective input queue 115, 135, e.g. the queue fill level.

Station A 110 sends packets 120 to station B 130. The packets 120 pass through the packet delay analyzer 131 and are then passed to the input queue 135 before further processing. If the buffer monitor 134 detects the passing of a high-water mark in the input queue 135, it passes this information to the inter-packet delay manipulator 132 which is in charge of generating a packet flow to station A 110 with a modified inter-packet delay based upon the buffer fill level information. Consequently, the inter-packet delay 125 between the packets 122 and 123 is modified. It may occur that for a certain time no packets need to be sent from the second network element 130 to the first network element 110 and that the distance or delay between two packets, such as the distance between packets 123 and 124, would be too big in order to maintain the inter-packet delay within strict bounds. In such cases, the fake packet generator 133 may insert fake packets 121, such that the inter-packet delays 126 and 127 remain within the same inter-packet delay bounds as the inter-packet delay 125 between regular data packets.

The incoming packets 122, 123, 121 and 124 are received by the packet delay analyzer 111 of the first network element 110 which detects the modified inter-packet delay 125, 126, 127. It passes this information to the transmitter 117 of the first network element 110, which then adapts the frequency of the packets 120 sent to the second network element 130. This situation may be maintained until the packet delay analyzer 111 detects that the inter-packet delays 125, 126, 127 of the received packets is not maintained within strict bounds for a certain time period anymore or has been increased again to an initial value. In this case, the transmitter 117 may resume to sending packets at an increased frequency.

In other words, Station A 110 sends a stream of packets 120 to station B 130. Station B's 130 input queue 135 is passing a high-water mark and station B 130 wants to signal to station A 110 to lower the amount of data that station A 110 sends to station B 130. Station B 130 does this by keeping - over a period of time - the inter-packet delay 125, 126, 127 of the packets 122, 123, 121, 124 sent to station A 110 within strict bounds. If needed fake packets 121 are added to achieve this. The packet delay analyzer 111 of station A 110 detects the strict inter-packet delay and by this, station A 110 is informed to throttle the amount of data that is sent to station B 130. If the inter-packet delay received by station A 110 varies outside the strict bound over a period of time the throttle may be removed by station A 110.

The present invention discloses a protocol independent way to signal back pressure from a receiving network element back to a sending network element. As the proposed method uses transmission parameters which are outside of the protocol scope, it does not matter what protocols the packets are actually carrying. The method may be implemented -regardless of the used protocol - within a sending and a receiving network element. In particular, this may be beneficial if the used protocol does not allow for closed-loop flow control mechanisms. Furthermore, such a mechanism may be built into the hardware, preferably within the chipsets, of transmitters and receivers. As the proposed method is protocol independent, such hardware may be used in combination with different protocols.

## Claims

1. A method for controlling a bi-directional packet flow between a first and a second network element (110, 130) connected via a point-to-point connection comprising the steps of:
- detecting at the second network element (130) that an input buffer threshold has been reached;
- signaling this information to the first network element (110) by modifying an inter-packet delay between the packets of the packet flow sent from the second network element (130) to the first network element (110) and by maintaining the inter-packet delay within strict bounds over a certain period of time;
- detecting at the first network element (110) that the inter-packet delay between the packets of the packet flow received from the second network element (130) has been modified and is maintained within the strict bounds over the certain period of time;
- decoding the fact that the inter-packet delay between the packets of the packet flow received from the second network element (130) is maintained within the strict bounds over the certain period of time as an instruction to change the amount of traffic sent by the first network element (110) to the second network element (130); and
- changing the amount of traffic sent by the first network element (110) to the second network element (130) according to a predefined scheme agreed between the second network element (130) and the first network element (110).

2. The method according to claim 1, wherein if there are not enough packets to be sent from the second network element (130) to the first network element (110), the second network element (130) inserts fake packets which are sent to the first network element (110) in order to maintain the modified inter-packet delay within the strict bounds.

3. The method according to claim 2, wherein upon detection by the first network element (110) of an inter-packet delay that Is kept within the strict bounds over the period of time, the first network element (110) reduces the frequency of sending or halts the sending of packets to the second network element (130).

4. The method according to claim 3, wherein
- the first network element (110) sends packets to the second network element (130) with a first frequency;
- upon detection by the first network element (110) of an inter-packet delay that is kept within the strict bounds over the certain period of time, the first network element (110) sends packets to the second network element (130) at a reduced second frequency; and
- upon detection by the first network element (110) that the inter-packet delay is not kept within the strict bounds over the certain period of time, the first network elements (110) resumes to sending packets to the second network element (130) with the first frequency.

5. The method according to claim 2, wherein upon detection of a reduced inter-packet delay by the first network element (110), the first network element (110) reduces the amount of traffic sent to the second network element (130).

6. The method according to claim 2, wherein the first network element (110) dumps the fake packets received from the second network element (130).

7. The method according to claim 2, comprising the additional step of:
- measuring at the first network element a value by which the inter-packet delay has been modified; and
wherein the changing the amount of traffic sent by the first network element (110) to the second network element (130) is proportional to the measured value.

8. A second network element (130) communicating with a first network element (110) via a point-to-point connection comprising:
- means (134) to detect that a buffer threshold of an input packet queue has been reached; and
- means (132) to signal this information to the first network element (110) by modifying an inter-packet delay between the packets of a packet flow sent from the second network element (130) to the first network element (110) and by maintaining the inter-packet delay within strict bounds over a certain period of time as an instruction to change the amount of traffic sent by the first network element to the second network element.

9. A first network element (110) communicating with a second network element (130) via a point-to-point connection comprising:
- means (111) to detect that an inter-packet delay between the packets of a packet flow received from the second network element (130) has been modified and is maintained within strict bounds over a certain period of time;
- means to decode the fact that the inter-packet delay between the packets of the packet flow received from the second network element (130) is maintained within the strict bounds over the certain period of time as an instruction to change the amount of traffic sent by the first network element (110) to the second network element (130); and
- means (117) to change the amount of traffic sent to the second network element (130) according to a pre-defined scheme agreed between the second network element (130) and the first network element (110).

## Patentansprüche

1. Verfahren zur Steuerung eines bidirektionalen Paketflusses zwischen einem ersten und einem zweiten Netzwerkelement (110, 130), welche über eine Punkt-zu-Punkt-Verbindung verbundenen sind, die folgenden Schritte umfassend:
- Erkennen, an dem zweiten Netzwerkelement (130), dass ein Eingangs-Puffergrenzwert erreicht worden ist:
- Signalisieren dieser Information an das erste Netzwerkelement (110) durch Ändern der Verzögerung zwischen den Paketen des von dem zweiten Netzwerkelement (130) an das erste Netzwerkelement (110) gesendeten Paketflusses, und durch Halten der Verzögerung zwischen den Paketen über einen bestimmten Zeitraum innerhalb strenger Grenzen;
- Erkennen, an dem ersten Netzwerkelement (110), dass die Verzögerung zwischen den Paketen des von dem zweiten Netzwerkelement (130) empfangenen Paketflusses geändert worden ist und über einen bestimmten Zeitraum innerhalb der strengen Grenzen gehalten wird;
- Übersetzen der Tatsache, dass die Verzögerung zwischen den Paketen des von dem zweiten Netzwerkelement (130) empfangenen Paketflusses über einen bestimmten Zeitraum innerhalb der strengen Grenzen gehalten wird, als Befehl, die von dem ersten Netzwerkelement (110) an das zweite Netzwerkelement (130) gesendete Verkehrsmenge zu ändern; und
- Ändern der von dem ersten Netzwerkelement (110) an das zweite Netzwerkelement (130) gesendeten Verkehrsmenge gemäß einem zwischen dem zweiten Netzwerkelement (130) und dem ersten Netzwerkelement (110) vereinbarten vordefinierten Schema.

2. Verfahren nach Anspruch 1, wobei, wenn nicht genug Pakete vorhanden sind, die von dem zweiten Netzwerkelement (130) an das erste Netzwerkelement (110) gesendet werden sollen, das zweite Netzwerkelement (130) gefälschte Pakete einfügt, die an das erste Netzwerkelement (110) zu senden sind, um die geänderte Verzögerung zwischen den Paketen innerhalb der strengen Grenzen zu halten.

3. Verfahren nach Anspruch 2, wobei, wenn das erste Netzwerkelement (110) eine Verzögerung zwischen den Paketen erkennt, die über den Zeitraum innerhalb der strengen Grenzen gehalten wird, das erste Netzwerkelement (110) die Frequenz der Übertragung reduziert oder die Übertragung der Pakete an das zweite Netzwerkelement (130) unterbricht.

4. Verfahren nach Anspruch 3, wobei
- das erste Netzwerkelement (110) Pakete mit einer ersten Frequenz an das zweite Netzwerkelement (130) sendet;
- wenn das erste Netzwerkelement (110) eine Verzögerung zwischen den Paketen, welche über einen bestimmten Zeitraum innerhalb der strengen Grenzen gehalten wird, erkennt, das erste Netzwerkelement (110) Pakete mit einer reduzierten zweiten Frequenz an das zweite Netzwerkelement (130) sendet; und
- wenn das erste Netzwerkelement (110) erkennt, dass die Verzögerung zwischen den Paketen nicht über den bestimmten Zeitraum innerhalb der strengen Grenzen gehalten wird, das erste Netzwerkelement (110) das Senden von Paketen an das zweite Netzwerkelement (130) mit der ersten Frequenz fortsetzt.

5. Verfahren nach Anspruch 2, wobei, wenn das erste Netzwerkelement (110) eine reduzierte Verzögerung zwischen den Paketen erkennt, das erste Netzwerkelement (110) die an das zweite Netzwerkelement (130) gesendete Verkehrsmenge reduziert.

6. Verfahren nach Anspruch 2, wobei das erste Netzwerkelement (110) die von dem zweiten Netzwerkelement (130) empfangenen gefälschten Pakete abstößt.

7. Verfahren nach Anspruch 2, den folgenden zusätzlichen Schritt umfassend:
- Messen, an dem ersten Netzwerkelement, eines Wertes, um welchen die Verzögerung zwischen den Paketen geändert wurde; und
wobei die Änderung der von dem ersten Netzwerkelement (110) an das zweite Netzwerkelement (130) gesendeten Verkehrsmenge proportional zu dem gemessenen Wert ist.

8. Zweites Netzwerkelement (130), welches über eine Punkt-zu-Punkt-Verbindung mit einem ersten Netzwerkelement (110) kommuniziert, umfassend:
- Mittel (134) zum Erkennen, dass ein Puffergrenzwert einer Paketeingangswarteschlange erreicht worden ist; und
- Mittel (132) zum Signalisieren dieser Information an das erste Netzwerkelement (110) durch Ändern einer Verzögerung zwischen den Paketen eines von dem zweiten Netzwerkelement (130) an das erste Netzwerkelement (110) gesendeten Paketflusses und durch Halten der Verzögerung zwischen den Paketen über einen bestimmten Zeitraum innerhalb strenger Grenzen als Befehl, die von dem ersten Netzwerkelement an das zweite Netzwerkelement gesendete Verkehrsmenge zu ändern.

9. Erstes Netzwerkelement (110), welches mit einem zweiten Netzwerkelement (130) über eine Punkt-zu-Punkt-Verbindung kommuniziert, umfassend:
- Mittel (111) zum Erkennen, dass eine Verzögerung zwischen den Paketen eines von dem zweiten Netzwerkelement (130) empfangenen Paketflusses geändert worden ist und über einen bestimmten Zeitraum innerhalb strenger Grenzen gehalten wird;
- Mittel zum Übersetzen der Tatsache, dass die Verzögerung zwischen den Paketen eines von dem zweiten Netzwerkelement (130) empfangenen Paketflusses über den bestimmten Zeitraum innerhalb der strengen Grenzen gehalten wird, als Befehl, die von dem ersten Netzwerkelement (110) an das zweite Netzwerkelement (130) gesendete Verkehrsmenge zu ändern; und
- Mittel (117) zum Ändern der an das zweite Netzwerkelement (130) gesendeten Verkehrsmenge gemäß einem zwischen dem zweiten Netzwerkelement (130) und dem ersten Netzwerkelement (110) vereinbarten vordefinierten Schema.

## Revendications

1. Procédé de contrôle d'un flux de paquets bidirectionnel entre un premier et un second éléments de réseau (110, 130) connectés via une connexion point à point, comprenant les étapes suivantes :
- détection sur le second élément de réseau (130) du fait qu'un seuil d'entrée en mémoire tampon a été atteint ;
- signalisation de cette information au premier élément de réseau (110) en modifiant un retard entre les paquets du flux de paquets envoyé du second élément de réseau (130) au premier élément de réseau (110) et en maintenant le retard entre les paquets dans des limites strictes pendant une certaine durée ;
- détection sur le premier élément de réseau (110) du fait que le retard entre les paquets du flux de paquets reçu depuis le second élément de réseau (130) a été modifié et est maintenu dans des limites strictes pendant la durée prévue ;
- décodage du fait que le retard entre les paquets du flux de paquets reçu depuis le second élément de réseau (130) est maintenu dans les limites strictes pendant la durée prévue comme étant une instruction de modification de la quantité de trafic envoyée par le premier élément de réseau (110) au second élément de réseau (130) ; et
- modification de la quantité de trafic envoyée par le premier élément de réseau (110) au second élément de réseau (130) conformément à un schéma prédéfini agréé entre le second élément de réseau (130) et le premier élément de réseau (110).

2. Procédé selon la revendication 1, dans lequel s'il n'y a pas suffisamment de paquets à envoyer du second élément de réseau (130) au premier élément de réseau (110), le second élément de réseau (130) insère des faux paquets qui sont envoyés au premier élément de réseau (110) afin de maintenir le retard modifié entre les paquets dans les limites strictes.

3. Procédé selon la revendication 2, dans lequel suite à la détection par le premier élément de réseau (110) d'un retard entre les paquets qui est maintenu dans les limites strictes pendant la durée prévue, le premier élément de réseau (110) réduit la fréquence d'envoi ou cesse l'envoi de paquets au second élément de réseau (130).

4. Procédé selon la revendication 3, dans lequel
- le premier élément de réseau (110) envoie les paquets au second élément de réseau (130) selon une première fréquence ;
- suite à la détection par le premier élément de réseau (110) d'un retard entre les paquets qui est maintenu dans les limites strictes pendant la durée prévue, le premier élément de réseau (110) envoie des paquets au second élément de réseau (130) selon une seconde fréquence réduite ; et
- suite à la détection par le premier élément de réseau (110) du fait que le retard entre les paquets n'est pas maintenu dans les limites strictes pendant la durée prévue, le premier élément de réseau (110) reprend l'envoi des paquets au second élément de réseau (130) selon la première fréquence.

5. Procédé selon la revendication 2, dans lequel, suite à la détection d'un retard réduit entre les paquets par le premier élément de réseau (110), le premier élément de réseau (110) réduit la quantité de trafic envoyée au second élément de réseau (130).

6. Procédé selon la revendication 2, dans lequel le premier élément de réseau (110) vide la mémoire des faux paquets reçus depuis le second élément de réseau (130).

7. Procédé selon la revendication 2, comprenant l'étape supplémentaire suivante :
- mesure sur le premier élément de réseau d'une valeur de modification du retard entre les paquets ; et
dans lequel la modification de la quantité de trafic envoyée par le premier élément de réseau (110) au second élément de réseau (130) est proportionnelle à la valeur mesurée.

8. Second élément de réseau (130) communiquant avec un premier élément de réseau (110) via une connexion point à point, comprenant :
- des moyens (134) pour détecter qu'un seuil de mémoire tampon d'une file d'attente de paquets d'entrée a été atteint ; et
- des moyens (132) pour signaler cette information au premier élément de réseau (110) en modifiant un retard entre les paquets d'un flux de paquets envoyé du second élément de réseau (130) au premier élément de réseau (110) et en maintenant le retard entre les paquets dans des limites strictes pendant une certaine durée comme instruction de modification de la quantité de trafic envoyée par le premier élément de réseau au second élément de réseau.

9. Premier élément de réseau (110) communiquant avec un second élément de réseau (130) via une connexion point à point, comprenant :
- des moyens (111) pour détecter le fait que le retard entre les paquets d'un flux de paquets reçu depuis le second élément de réseau (130) a été modifié et est maintenu dans des limites strictes pendant une certaine durée ;
- des moyens pour décoder le fait que le retard entre les paquets du flux de paquets reçu depuis le second élément de réseau (130) est maintenu dans les limites strictes pendant la durée prévue et est une instruction de modification de la quantité de trafic envoyée par le premier élément de réseau (110) au second élément de réseau (130) ; et
- des moyens (117) pour modifier la quantité de trafic envoyée au second élément de réseau (130) conformément à un schéma prédéfini agréé entre le second élément de réseau (130) et le premier élément de réseau (110).
